# EUROPÄISCHE PATENTSCHRIFT

(11) **EP 1 346 004 B1**
(45) Veröffentlichungstag und Bekanntmachung des Hinweises auf die Patenterteilung: **23.08.2006**
(21) Anmeldenummer: 01991850.7
(22) Anmeldetag: 14.12.2001
(51) Int. Cl.: C09K 5/20, H01M 8/04

(54) **KÜHLMITTEL FÜR KÜHLSYSTEME IN BRENNSTOFFZELLENANTRIEBEN**
COOLING AGENTS FOR COOLING SYSTEMS IN FUEL CELL DRIVES
AGENTS REFRIGERANTS POUR SYSTEMES DE REFROIDISSEMENT DE MECANISMES D'ENTRAINEMENT A CELLULES DE COMBUSTIBLE

(30) Priorität: 20.12.2000 DE 10063951
(43) Veröffentlichungstag der Anmeldung: 24.09.2003
(73) Patentinhaber: BASF Aktiengesellschaft, 67056 Ludwigshafen (DE)
(72) Erfinder: WENDEROTH, Bernd, 69488 Birkenau (DE); MESZAROS, Ladislaus, 67112 Mutterstadt (DE); DAMBACH, Stefan, 67454 Hassloch (DE); FIDORRA, Uwe, 67157 Wachenheim (DE); BERGEMANN, Marco, 68766 Hockenheim (DE)
(86) Internationale Anmeldenummer: PCT/EP2001/014786
(87) Internationale Veröffentlichungsnummer: WO 2002/055630

(56) Entgegenhaltungen:
- EP-A- 0 105 803
- WO-A-00/17951
- DE-A- 19 802 490
- US-A- 4 684 475

## Beschreibung

Die Erfindung betrifft ein Verfahren zum Schutz von Brennstoffzellenantrieben, insbesondere für Kraftfahrzeuge, vor Korrosion unter Verwendung von Kühlsystemen, die auf Gefrierschutzmittelkonzentraten auf Basis von Alkylenglykolen oder deren Derivaten, welche ortho-Kieselsäureester als Korrosionsinhibitoren enthalten, beruhen.

Brennstoffzellen für den mobilen Einsatz in Kraftfahrzeugen müssen auch bei niedrigen Außentemperaturen von bis zu etwa -40°C betrieben werden können; ein frostgeschützter Kühlmittelkreislauf ist deshalb unerlässlich.

Die Verwendung von bei Verbrennungsmotoren eingesetzten herkömmlichen Kühlerschutzmitteln wäre bei Brennstoffzellen ohne eine vollständige elektrische Isolierung der Kühlkanäle nicht möglich, da diese Mittel wegen der darin als Korrosionsinhibitoren enthaltenen Salze eine zu hohe elektrische Leitfähigkeit haben, was die Funktion der Brennstoffzelle negativ beeinträchtigen würde.

Die DE-A 198 02 490 (1) beschreibt Brennstoffzellen mit einem frostgeschützten Kühlkreislauf, bei dem als Kühlmittel eine paraffinische Isomerenmischung mit einem Pour Point von kleiner als -40°C verwendet wird. Nachteilig ist jedoch die Brennbarkeit des solchen Kühlmittels.

Aus der EP-A 1 009 050 (2) ist ein Brennstoffzellensystem für Automobile bekannt, bei dem als Kühlmedium Luft verwendet wird. Nachteilig ist dabei allerdings, daß Luft bekanntlich ein schlechterer Wärmeleiter als ein flüssiges Kühlmedium ist.

Die WO 00/17951 (3) beschreibt ein Kühlsystem für Brennstoffzellen, bei dem als Kühlmittel ein reines Monoethylenglykol/Wasser-Gemisch im Verhältnis 1:1 ohne Additive eingesetzt wird. Da wegen fehlender Korrosionsinhibitoren keinerlei Korrosionsschutz gegenüber den im Kühlsystem vorhandenen Metallen vorhanden wäre, enthält der Kühlkreislauf eine Ionenaustauscher-Einheit, um die Reinheit des Kühlmittels zu erhalten und um längere Zeit eine niedrige spezifische Leitfähigkeit zu gewährleisten, wodurch Kurzschlüsse und Korrosion verhindert werden. Als geeignete Ionenaustauscher werden anionische Harze wie zum Beispiel vom stark alkalischen Hydroxyl-Typ und kationische Harze wie zum Beispiel auf Sulfonsäuregruppen-Basis sowie andere Filtrationseinheiten wie zum Beispiel Aktivkohlefilter genannt.

Der Aufbau und die Funktionsweise einer Brennstoffzelle für Automobile, insbesondere einer Brennstoffzelle mit elektronenleitender Elektrolytmembran ("PEM-Brennstoffzelle", "polymer elelectrolyte membrane fuel cell") ist in (3) exemplarisch beschrieben, wobei als bevorzugte Metallkomponente im Kühlkreislauf (Kühler) Aluminium bevorzugt wird.

Der Einsatz von Siliziumverbindungen, meistens in Form von Silicaten, als Korrosionsinhibitoren in Kühlerschutzmitteln für herkömmliche, mit Otto- oder Dieselkraftstoff betriebene Verbrennungsmotoren ist seit langem bekannt, beispielsweise aus: G. Reinhard, "Aktiver Korrosionsschutz in wäßrigen Medien", S. 87-98, expert-Verlag 1995 (ISBN 3-8169-1265-6).

Aus der EP-A 105 803 (4) ist die Verwendung von ortho-Kieselsäureestern neben ionischen Korrosionsinhibitoren in Kühlerschutzmitteln für Automobile mit herkömmlichen Otto- oder Diesel-Verbrennungsmotoren bekannt.

Die Verwendung von ortho-Kieselsäureestern als Korrosionsinhibitoren in Kühlmitteln für Kühlsysteme in Brennstoffzellenantrieben ist bisher nicht bekannt.

Ein Hauptproblem bei Kühlsystemen in Brennstoffzellenantrieben ist die Aufrechterhaltung einer niedrigen elektrischen Leitfähigkeit des Kühlmittels, um eine sichere und störungsfreie Funktion der Brennstoffzelle zu gewährleisten und dauerhaft Kurzschlüsse und Korrosion zu verhindern.

Überraschenderweise wurde nun gefunden, daß sich die Zeitdauer für eine niedrige elektrische Leitfähigkeit in einem Kühlsystem auf Basis Alkylenglykol/Wasser, insbesondere wenn es gemäß (3) einen integrierten Ionenaustauscher enthält, durch die Zugabe geringer Mengen von ortho-Kieselsäureestern deutlich verlängern läßt; dies bietet für die Praxis den Vorteil, daß sich die Zeitintervalle zwischen zwei Kühlmittelwechseln bei Brennstoffzellenantrieben weiter ausdehnen lassen, was insbesondere im Automobilsektor von Interesse ist.

Demgemäß wurde ein Verfahren zum Schutz von Brennstoffzellenantrieben vor Korrosion unter Verwendung von Kühlmittelsystemen, die auf Gefrierschutzmittelkonzentraten auf Basis von Alkylenglykolen oder deren Derivaten beruhen, aus welchen gebrauchsfertige wäßrige Kühlmittelzusammensetzungen mit einer Leitfähigkeit von maximal 50 µS/cm resultieren, gefunden, welche ortho-Kieselsäureester der allgemeinen Formel (I) 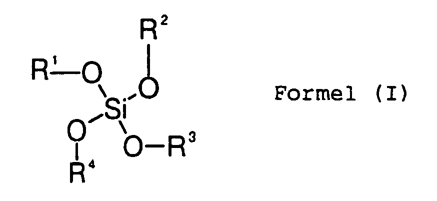 in der die Variablen R¹ bis R⁴ gleich oder verschieden sind und C₁- bis C₂₀-Alkyl-, C₂- bis C₂₀-Alkenyl-, C₁- bis C₂₀-Hydroxyalkyl-, gegebenenfalls substituierte C₆- bis C₁₂-Aryl- und/oder Glykolether-Substituenten der Formel -(CH₂-CH₂-O)ₙ-R⁵ bedeuten, wobei R⁵ Wasserstoff oder C₁- bis C₅-Alkyl bezeichnet und n für die Zahl 1 bis 5 steht, enthalten.

Bevorzugt werden hierbei Gefrierschutzmittelkonzentrate, aus welchen gebrauchsfertige wäßrige Kühlmittelzusammensetzungen mit einem Siliziumgehalt von 2 bis 2000 Gew.-ppm, insbesondere 10 bis 1000 Gew.-ppm, vorzugsweise 25 bis 500 Gew.-ppm, vor allem 40 bis 250 Gew.-ppm, aus ortho-Kieselsäureestern der allgemeinen Formel I resultieren.

Typische Beispiele für erfindungsgemäß verwendeten ortho-Kieselsäureester (I) sind reine Tetraalkoxysilane wie Tetramethoxysilan, Tetraethoxysilan, Tetra(n-propoxy)silan, Tetra(iso-propoxy)silan, Tetra(n-butoxy)silan, Tetra(tert.-butoxy)silan, Tetra(2-ethylbutoxy)silan oder Tetra(2-ethylhexoxy)silan, sowie weiterhin Tetraphenoxysilan, Tetra-(2-methylphenoxy)silan, Tetravinyloxysilan, Tetraallyloxysilan, Tetra(2-hydroxyethoxy)silan, Tetra(2-ethoxyethoxy)silan, Tetra(2-butoxyethoxy)silan, Tetra (1-methoxy-2-propoxy)silan, Tetra(2-methoxyethoxy)silan oder Tetra[2-[2-(2-methoxyethoxy)ethoxy]ethoxy]silan. Die verwendeten ortho-Kieselsäureester (I) haben vorzugsweise vier gleiche Variablen R¹ bis R⁴.

In einer bevorzugten Ausführungsform werden ortho-Kieselsäureester (I), bei denen die Variablen R¹ bis R⁴ gleich sind und C₁₋bis C₄-Alkyl-, oder Glykolether-Substituenten der Formel -(CH₂-CH₂-O)ₙ-R⁵ bedeuten, wobei R⁵ Wasserstoff, Methyl oder Ethyl bezeichnet und n für die Zahl 1, 2 oder 3 steht, verwendet.

Die genannten ortho-Kieselsäureester (I) sind entweder kommerziell verfügbar oder durch einfache Umesterung eines Äquivalentes Tetramethoxysilan mit vier Äquivalenten des entsprechenden längerkettigen Alkohols oder Phenols durch Abdestillieren von Methanol herstellbar.

Aus den Gefrierschutzmittelkonzentraten lassen sich durch Verdünnen mit ionenfreiem Wasser gebrauchsfertige wäßrige Kühlmittelzusammensetzungen mit einer Leitfähigkeit von maximal 50 µS/cm, die im wesentlichen aus
(a) 10 bis 90 Gew.-% Alkylenglykolen oder deren Derivaten,
(b) 90 bis 10 Gew.-% Wasser und
(c) 2 bis 2000 Gew.-ppm, vorzugsweise 25 bis 500 Gew.-ppm, Silizium aus ortho-Kieselsäureestern der allgemeinen Formel I
bestehen, herstellen. Die Summe aller Komponenten beträgt hierbei 100 Gew.-%.

Die gebrauchsfertigen wäßrigen Kühlmittelzusammensetzungen weisen eine anfängliche elektrische Leitfähigkeit von maximal 50 µS/cm, insbesondere 25 µS/cm, vorzugsweise 10 µS/cm, vor allem 5 µS/cm, auf. Die Leitfähigkeit wird im Dauerbetrieb des Brennstoffzellenantriebes über mehrere Wochen oder Monate auf diesem niedrigen Niveau gehalten, insbesondere wenn im Brennstoffzellenantrieb ein Kühlsystem mit integriertem Ionenaustauscher verwendet wird.

Der pH-Wert der gebrauchsfertigen wäßrigen Kühlmittelzusammensetzungen fällt über die Betriebsdauer deutlich langsamer ab als bei nicht mit ortho-Kieselsäureestern additivierten Kühlflüssigkeiten. Der pH-Wert liegt üblicherweise im Bereich von 4,5 bis 7 bei frischen erfindungsgemäßen Kühlmittelzusammensetzungen und kann im Dauerbetrieb bis auf 3,5 abfallen.

Das zum Verdünnen verwendete ionenfreie Wasser kann reines destilliertes oder bidestilliertes Wasser oder beispielsweise durch Ionenaustausch entionisiertes Wasser sein.

Das bevorzugte Gew.-Mischungsverhältnis von Alkylenglykol bzw. deren Derivaten zu Wasser in den gebrauchsfertigen wäßrigen Kühlmittelzusammensetzungen beträgt 25:75 bis 80:20, insbesondere 35:65 bis 75:25, vorzugsweise 50:50 bis 70:30, vor allem 55:45 bis 65:35. Als Alkylenglykol-Komponente bzw. Derivate hiervon können insbesondere Monoethylenglykol, daneben aber auch Monopropylenglykol, Polyglykole, Glykolether oder Glycerin jeweils allein oder als Mischungen hieraus verwendet werden. Besonders bevorzugt werden Monoethylenglykol allein oder Mischungen von Monoethylenglykol als Hauptkomponente, d.h. mit einem Gehalt in der Mischung von mehr als 50 Gew.-%, insbesondere von mehr als 80 Gew.-%, vor allem von mehr als 95 Gew.-%, mit anderen Alkylenglykolen oder Derivaten von Alkylenglykolen.

Die Dosierung der jeweiligen ortho-Kieselsäureester (I) in den gebrauchsfertigen wäßrigen Kühlmittelzusammensetzungen errechnet sich aus den obigen Angaben über den auf (I) bezogenen SiliziumGehalt.

Die Gefrierschutzmittelkonzentrate selbst, aus denen die beschriebenen gebrauchsfertigen wäßrigen Kühlmittelzusammensetzungen resultieren, lassen sich durch Auflösen der ortho-Kieselsäureester (I) in Alkylenglykolen oder deren Derivaten, die wasserfrei oder mit einem geringen Gehalt an Wasser (etwa bis zu 10 Gew.-%, insbesondere bis zu 5 Gew.-%) eingesetzt werden können, herstellen.

Gegenstand der vorliegenden Erfindung ist weiterhin die Verwendung der beschriebenen Gefrierschutzmittelkonzentrate zur Herstellung von gebrauchsfertigen wäßrigen Kühlmittelzusammmensetzungen mit einer Leitfähigkeit von maximal 50 µS/cm für Kühlsysteme in Brennstoffzellenantrieben, insbesondere für Kraftfahrzeuge.

### Beispiele

Die Erfindung wird in den folgenden Beispielen erläutert, ohne sie jedoch darauf zu beschränken.

Die Kühlmittelzusammensetzungen wurden in dem nachfolgend beschriebenen Test im Vergleich zu einer Kühlmittelzusammensetzung gemäß (3) bezüglich ihrer Eignung für Brennstoffzellenantriebe geprüft:

### Versuchsbeschreibung:

Fünf Aluminium-Prüfmetalle (vakuumgelötetes Al, Bezeichnung: EN-AW 3005, einseitig lotplattiert mit 10 Gew.-% EN-AW 4045; Abmessungen: 58x26x0,35 mm mit einer Bohrung von 7 mm Durchmesser) wurden gewogen, mittels einer Kunstoffschraube mit Mutter und Teflonscheiben nichtleitend verbunden und auf zwei Teflonständern in ein 1 1 Becherglas mit Schliff und Glasdeckel gestellt. Anschließend wurden 1000 ml Testflüssigkeit eingefüllt und ein kleiner Stoffsack mit 2,5 g eines Ionenaustauschers (Mischbettharz-Ionenaustauscher AMBERJET UP 6040 RESIN der Firma Rohm + Haas) wurde in die Flüssigkeit gehängt. Das Becherglas wurde mit dem Glasdeckel luftdicht verschlossen, auf 88°C aufgeheizt und die Flüssigkeit wurde mit einem Magnetrührer kräftig gerührt. Die elektrische Leitfähigkeit wurde bei Testbeginn sowie nach 7 und 42 (bzw. nach 77) Tagen gemessen (Leitfähigkeitsmeßgerät LF 530 der Firma WTW/Weilheim). Danach wurde der Test beendet; die Aluminiumproben wurden visuell beurteilt und nach dem Beizen mit wäßriger Chromsäure/Phosphorsäure gemäß ASTM D 1384-94 gravimetrisch ausgewertet.

Die Ergebnisse sind der nachstehenden Tabelle 1 zu entnehmen.

**Tabelle**

| Kühlmittel-Zusammensetzung: | Vergleichsbeispiel (gemäß WO 00/17951): 60 Vol.-% Monoethylenglykol 40 Vol.-% Wasser | Beispiel 1: 60 Vol.-% Monoethylenglykol 40 Vol.-% Wasser 742 Gew.-ppm Tetraethoxysilan | Beispiel 2: 60 Vol.-% Monoethylenglykol 40 Vol.-% Wasser 3600 Gew.-ppm Tetra[2-[2-(2-methoxyethoxy) ethoxy]ethoxy]silan |
|---|---|---|---|
| Elektrische Leitfähigkeit [µS/cm] | | | |
| Testbeginn: | 2,0 | 0,8 | 2,6 |
| Nach 7 Tagen: | 2,3 | 0,8 | 2,2 |
| Nach 42 Tagen: | 36,2 | 3,0 | 14,4 |
| Nach 77 Tagen: | --- | --- | 18,6 |

| pH-Wert | | | |
|---|---|---|---|
| Testbeginn: | 6,9 | 6,6 | 4,7 |
| Testende: | 2,9 | 4,0 | 3,6 |

| Aussehen | leicht angelaufen | angelaufen | angelaufen |
|---|---|---|---|
| Aluminiumproben nach dem Test: | | | |
| Gewichtsänderung [mg/cm²] Nach dem Beizen: | | | |
| 1 | - 0,05 | - 0,02 | - 0,02 |
| 2 | - 0,04 | - 0,01 | - 0,02 |
| 3 | - 0,04 | - 0,02 | - 0,04 |
| 4 | - 0,04 | - 0,02 | - 0,04 |
| 5 | - 0,03 | - 0,02 | - 0,04 |
| Mittelwert der 5 Proben | - 0,04 | - 0,02 | - 0,03 |
| Lösung nach Testende | gelblich, klar | Farblos, klar | gelblich, klar |

Bei der Mischung aus Monoethylenglykol und Wasser entspricht das Vol.-Verhältnis von 60:40 einem Gew.-Verhältnis von 62,5:37,5.

Bei den erfindungsgemäßen Beispielen 1 und 2 wurden die ortho-Kieselsäureester so dosiert, daß in der Kühlflüssigkeit ein Silizium-Gehalt von jeweils 100 Gew.-ppm vorlag.

Die Ergebnisse zeigen, daß auch nach einer ununterbrochenen Versuchsdauer von 42 Tagen bei dem erfindungsgemäßen Beispiel 1 noch eine sehr geringe elektrische Leitfähigkeit von weniger als 5 µS/cm vorlag, während bei dem nicht additivierten Kühlmittel gemäß WO 00/17951 (3) mit einem Anstieg auf fast 40 µS/m eine deutliche Verschlechterung aufgetreten war. Mit dem gegenüber Beispiel 1 nach 42 Tagen etwas schlechteren erfindungsgemäßen Beispiel 2 lag aber selbst nach einer Testdauer von 72 Tagen die spezifische Leitfähigkeit noch um ca. 50% niedriger als beim Vergleichsbeispiel nach 42 Tagen Testdauer.

In keinem Fall trat eine nennenswerte Korrosion an den Aluminium-Proben auf.

## Patentansprüche

1. Verfahren zum Schutz von Brennstoffzellenantrieben vor Korrosion unter Verwendung von Kühlsystemen, die auf Gefrierschutzmittelkonzentraten auf Basis von Alkylenglykolen oder deren Derivaten beruhen, aus welchen gebrauchsfertige wäßrige Kühlmittelzusammensetzungen mit einer Leitfähigkeit von maximal 50 µS/cm resultieren, **dadurch gekennzeichnet, daß** die Gefrierschutzmittelkonzentrate ortho-Kieselsäureester der allgemeinen Formel I 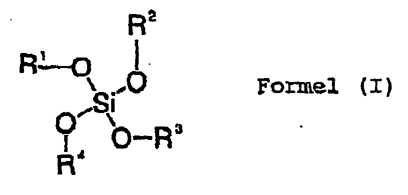 in der die Variablen R¹ bis R⁴ gleich oder verschieden sind und C₁- bis C₂₀-Alkyl-, C₂- bis C₂₀-Alkenyl-, C₁- bis C₂₀-Hydroxyalkyl-, gegebenenfalls substituierte C₆- bis C₁₂-Aryl- und/oder Glykolether-Substituenten der Formel -(CH₂-CH₂-O)ₙ-R⁵ bedeuten, wobei R⁵ Wasserstoff oder C₁- bis C₅-Alkyl bezeichnet und n für die Zah1 1 bis 5 steht, enthalten.

2. Verfahren nach Anspruch 1, **dadurch gekennzeichnet, daß** aus den Gefrierschutzmittelkonzentraten gebrauchsfertige wäßrige Kühlmittelzusanunensetzungen mit einem Siliziumgehalt von 2 bis 2000 Gew.-ppm, vorzugsweise 25 bis 500 Gew.-ppm, aus ortho-Kieselsäureestern der allgemeinen Formel I resultieren.

3. Verfahren nach Anspruch 1 oder 2, **dadurch gekennzeichnet, daß** die Gefrierschutzmittelkonzentrate ortho-Kieselsäureester der allgemeinen Formel I, bei denen die Variablen R¹ bis R⁴ gleich sind und C₁- bis C₄-Alkyl-, oder Glykolether-Substituenten der Formel -(CH₂-CH₂-O)ₙ-R⁵ bedeuten, wobei R⁵ Wasserstoff, Methyl oder Ethyl bezeichnet und n für die Zahl 1, 2 oder 3 steht, enthalten.

4. Verfahren nach den Ansprüchen 1 bis 3, **dadurch gekennzeichnet, daß** für die Gefrierschutzmittelkonzentrate Monoethylenglykol als Alkylenglykol eingesetzt wird.

5. Verfahren nach den Ansprüchen 1 bis 4, **dadurch gekennzeichnet, daß** aus den Gefrierschutzmittelkonzentraten durch Verdünnen mit ionenfreiem Wasser gebrauchsfertige wäßrige Kühlmittelzusammensetzungen mit einer Leitfähigkeit von maximal 50 µS/cm, die im wesentlichen aus
(a) 10 bis 90 Gew.-% Alkylenglykolen oder deren Derivaten,
(b) 90 bis 10 Gew.-% Wasser und
(c) 2 bis 2000 Gew.-ppm, vorzugsweise 25 bis 500 Gew.-ppm, Silizium aus ortho-Kieselsäureestern der allgemeinen Formel I
bestehen, resultieren.

6. Verwendung von Gefrierschutzmittelkonzentraten gemäß Anspruch 1, 3 oder 4 zur Herstellung von gebrauchsfertigen wäßrigen Kühlmittelzusammensetzungen mit einer Leitfähigkeit von maximal 50 µS/cm für Kühlsysteme in Brennstoffzellenantrieben,

## Claims

1. A method of protecting fuel cell drives from corrosion using cooling systems which are based on antifreeze concentrates based on alkylene glycols or derivatives thereof, from which ready-to-use aqueous coolant compositions having a conductivity of not more than 50 µS/cm result, wherein the antifreeze concentrates comprise orthosilicic esters of the formula I 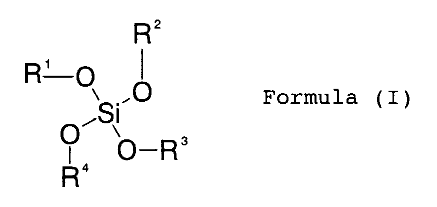 where R¹ to R⁴ are identical or different and are C₁- to C₂₀-alkyl, C₂- to C₂₀-alkenyl, C₁- to C₂₀-hydroxyalkyl, optionally substituted C₆- to C₁₂-aryl and/or a glycol ether substituent of the formula -(CH₂-CH₂-O)ₙ-R⁵, where R⁵ is hydrogen or C₁- to C₅-alkyl and n is from 1 to 5.

2. The method according to claim 1, wherein the antifreeze concentrates result in ready-to-use aqueous coolant compositions having a silicon content of from 2 to 2000, preferably from 25 to 500, ppm by weight, from orthosilicic esters of the formula I.

3. The method according to claim 1 or 2, wherein the antifreeze concentrates comprise orthosilicic esters of the formula I, in which R¹ to R⁴ are identical and are C₁- to C₄-alkyl or a glycol ether substituent of the formula -(CH₂-CH₂-O)ₙ-R⁵, where R⁵ is hydrogen, methyl or ethyl and n is 1, 2 or 3.

4. The method according to any of claims 1 to 3, wherein the alkylene glycol used for the antifreeze concentrates is monoethylene glycol.

5. The method according to any of claims 1 to 4, wherein ready-to-use aqueous coolant compositions which have a conductivity of not more than 50 µS/cm and substantially comprise
(a) from 10 to 90% by weight of alkylene glycols or derivatives thereof,
(b) from 90 to 10% by weight of water and
(c) from 2 to 2000, preferably from 25 to 500, ppm by weight of silicon from orthosilicic esters of the formula I
are produced from the antifreeze concentrates by dilution with ion-free water.

6. The use of an antifreeze concentrate according to claim 1, 3 or 4 for the preparation of ready-to-use aqueous coolant compositions having a conductivity of not more than 50 µS/cm for cooling systems in fuel cell drives.

## Revendications

1. Procédé de protection d'organes d'entraînement à pile à combustible vis-à-vis de la corrosion, par utilisation de systèmes de refroidissement qui reposent sur des concentrés de produit antigel à base d'alkylèneglycols ou de leurs dérivés, à partir desquels on obtient des compositions aqueuses d'agent réfrigérant prêtes à l'usage et présentant une conductibilité d'au maximum 50 µS/cm, **caractérisé en ce que** les concentrés de produit antigel contiennent des esters d'acide ortho-silicique de la formule générale I : 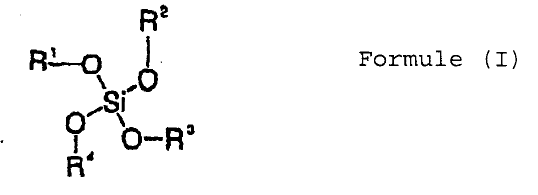 dans laquelle les variables R¹ à R⁴ sont identiques ou différentes et représentent des substituants alkyle en C₁-C₂₀, alcényle en C₂-C₂₀, hydroxyalkyle en C₂-C₂₀, aryle en C₆-C₁₂ éventuellement substitués et/ou éther de glycol de la formule -(CH₂-CH₂-O)ₙ-R⁵, où R⁵ représente de l'hydrogène ou un groupe alkyle en C₁-C₅ et n est un nombre de 1 à 5.

2. Procédé suivant la revendication 1, **caractérisé en ce qu'**à partir des concentrés de produit antigel on obtient des compositions aqueuses d'agent réfrigérant prêtes à l'usage et présentant une teneur de 2 à 2000 ppm en poids, de préférence de 25 à 500 ppm en poids, de silicium issu des esters d'acide ortho-silicique de la formue générale I.

3. Procédé suivant la revendication 1 ou 2, **caractérisé en ce que** les concentrés de produit antigel contiennent des esters d'acide ortho-silicique de la formule générale I, dans lesquels les variables R¹ à R⁴ sont identiques et représentent des substituants alkyle en C₁-C₄ ou éther de glycol de la formule - (CH₂-CH₂-O)ₙ-R⁵, où R⁵ représente de l'hydrogène ou un groupe méthyle ou éthyle et n est le nombre 1, 2 ou 3.

4. Procédé suivant les revendications 1 à 3, **caractérisé en ce que**, pour les concentrés de produit antigel, on met en oeuvre du mono-éthylèneglycol comme alkylèneglycol.

5. Procédé suivant les revendications 1 à 4, **caractérisé en ce que**, à partir des concentrés de produit antigel, on obtient par dilution avec de l'eau exempte d'ions des compositions aqueuses d'agent réfrigérant prêtes à l'usage ayant une conductibilité d'au maximum 50 µS/cm qui sont essentiellement constituées
(a) de 10 à 90 % en poids d'alkylèneglycols ou de leurs dérivés,
(b) de 90 à 10 % en poids d'eau, et
(c) de 2 à 2000 ppm en poids, de préférence de 25 à 500 ppm en poids, de silicium issu des esters d'acide ortho-silicique de la formule générale I.

6. Utilisation de concentrés de produit antigel suivant la revendication 1, 3 ou 4, pour la préparation de compositions aqueuses d'agent réfrigérant prêtes à l'usage présentant une conductibilité d'au maximum 50 µS/cm pour des systèmes de refroidissement dans des organes d'entraînement à pile à combustible.
